# EUROPEAN PATENT APPLICATION

(11) **EP 0 959 177 A2**
(43) Date of publication of application: **24.11.1999**
(21) Application number: 99106614.3
(22) Date of filing: 31.03.1999
(51) Int. Cl.: D21H 27/28, B44C 5/04

(54) **Microveneer decorative laminate, and method of making, and articles made therefrom**

(30) Priority: 21.05.1998 US 82872
(71) Applicant: Premark RWP Holdings, Inc., Wilmington, Delaware 19801 (US)
(72) Inventor: Oliver, J., T., Belton, TX 76513 (US); Lay, Timothy, J., Belton, TX 76513 (US); Palmer, Dorothy, H., Temple, TX 76502 (US)
(74) Representative: Howden, Christopher Andrew

(57) **Abstract**

A microveneer decorative laminate with wear resistant surface is made by limiting the flow of melamine resin through the decorative paper. The microveneer decorative laminate includes a decorative layer, a resin impregnated glueable backing not requiring sanding prior to glueing, and optionally one or more resin impregnated core layers, and also optionally, one or more resin impregnated overlay sheets.

## Description

The present invention relates to a decorative laminate, articles made therefrom, and method of making such laminate. In another aspect, the present invention relates to a very thin decorative laminate or "microveneer", articles made therefrom, and method of making such laminate. In even another aspect, the present invention relates to a very thin postformable decorative laminate, method of making, articles made therefrom, and method of postforming. In still another aspect, the present invention relates to a decorative laminate having a substantially cured melamine formaldehyde resin coated decorative paper with a glueable backing for allowing it to be adhesively bonded to any desired surface or substrate, to articles made from such laminate, and to a method of making such a laminate. Resin on a decorative surface of paper is cured under temperature and pressure conditions for improving the wear characteristics of the paper, with a resin impregnated backing provided to the paper to allow for adhesive bonding to any desired surface, resulting in a decorative member with good stain and wear characteristics.

Melamine resin impregnated decorative paper is commercially laminated to phenol formaldehyde resin impregnated kraft paper and liner board substrate for making high pressure laminate. Melamine resin impregnated decorative paper is also commercially laminated to particle board and other structural substrate for making low pressure laminate. Melamine resin in the impregnated decorative paper flows under laminating temperature and pressure conditions for bonding melamine resin impregnated decorative paper and substrate.

Overlay paper impregnated with melamine resin can be laminated over decorative paper for improving the wear characteristics of the laminate. Overlay impregnated with melamine resin can be laminated over decorative paper that is not impregnated with resin. Melamine resin in the impregnated overlay flows under laminating temperature and pressure conditions for bonding overlay impregnated with melamine resin and nonimpregnated decorative paper. Melamine resin is clear when fully cured and has stain and wear characteristics that has made it the resin of choice for many commercially available laminates. Resistance to discoloration due to heat and light is also realized.

U.S. Patent No. 4,076,896, to Bunkowski, discloses that melamine resins give a thorough impregnation and thereby insure a complete bond when employed in the production of laminates. Melamine resins have been used in the production of decorative, high pressure laminates wherein a plurality of phenolic resin impregnated kraft paper sheets have been used as a laminate core to which is bonded melamine resin impregnated decorative and overlay paper. These laminates are then adhesively bonded to a rigid substrate and used as partitions, walls doors, table and counter tops, etc. Laminated panels that can readily be fabricated into furniture, kitchen cabinets and the like are produced by applying a single melamine resin impregnated decorative paper to a particle board substrate at much lower pressure. These laminate panels have been designated "low pressure" panels.

Decorative paper is made from bleached wood pulp that is at least 60% in alpha cellulose content. Decorative paper is pigmented in a known manner to obtain the desired levels of color and opacity. They range in basis weight from about 50-90 pounds per 3,000 square foot ream. The paper has a controlled pH due to the influence pH has on the reaction rate of the melamine resin after it is applied thereto. Variances in this pH range have adverse effects on the storage life of the treated paper and/or press cycle times when the paper panel is being produced. Porosity is controlled to assure proper treating of the paper with the resin and pressing of the panel. A paper having too high a porosity will allow too much resin to penetrate and will result in dry spots on the panel produced therefrom. A paper with too low a porosity will not enable sufficient resin to penetrate and the excessive resin on the surface will cause a mottled appearance and surface crazing and/or cracking of the resultant panel made therefrom (U.S. Patent No. 4,076,896, Bunkowski).

Impregnation of the paper and drying of the impregnated paper may be effected by conventional treaters and dryers known to those skilled in the art. The resin content of the impregnated paper generally ranges from about 55% to about 65% by weight based on the weight of the impregnated paper. Paper volatile levels are maintained at about 5%±0.5% A balance between flow levels and treated weight of the treated paper is maintained to assure proper abrasion levels without reducing crack and/or craze resistance. Treated paper is beta-staged by drying at 150-360°F for about 1 to about 15 minutes and stored flat in a conditioned storage area. It has a nominal shelf life of at lest 3 month at 70-75°F and 4-50% relative humidity (U.S. Patent No. 4,076,896, Bunkowski).

Core material, i.e., self-supporting substrates useful in producing the decorative low-pressure panels include medium density, mat-formed, wood particle board and medium density wood fiberboard. Useful core material, however, must enable the production of full sized, smooth-faced, well-bonded, crack- and craze-resistant panels. Core materials should be stored for a sufficient time at ambient conditions to achieve an equilibrium temperature and an equilibrium moisture content of 7%±2% (U.S. Patent No. 4,076,896, Bunkowski).

In the formation of high pressure laminates, a decorative or print layer is superimposed upon a conventional, phenolic resin-impregnated core and with a melamine type resin-impregnated overlay disposed protectingly thereupon. The formed stack is then loaded between the polished metal plates of a hydraulic press that is then closed and subjected to a sufficient pressure and heat for an adequate period of time for fusing the stack into a single sheet. A paper suitable for the decorative layer of laminate has requisite porosity for bleeding there through of the resins of the core and the overlay during fusing but without necessitating prior impregnation of said layer. For optimum laminate strength the decorative layer must absorb the resins from the overlay and the core to form durable adhesive bonds therewith (U.S. Patent No. 3,816,232, Meiser, and U.S. Patent No. 3,949,133, Santurri, et al).

In the making of laminated cement forming materials, pre-cured bonded laminate overlay is formed is substantially cured prior to contact with the underlying substrate. The overlay is formed between two nearly perfectly smooth surfaces. Curing causes the resin material to become thermoset, thereby establishing a fixed final structure. Adhering the pre-cured bonded laminated overlay to solid substrate may be accomplished through the use of pressure and adhesive alone. It is preferred that both pressure and heat be employed to ensure a more secure adhesion. In order to obtain proper adhesion in a hot press between the pre-cured bonded laminate overlay and the solid substrate, a low water content adhesive must be applied between them. While many commercially available adhesives may be employed, a paper glue line sold under the trade name Plyocite PGL (Product No. 42-206) by Reichhold Chemicals, Inc. of Tacoma, Washington has proven quite satisfactory for such use. Paper glue line consists of an extremely thin sheet of cellulose impregnated with a high amount of resin. Consequently, the paper glue line possesses the adhesion properties of production grade glue, but with a much lower water content. This lower water content is required or blisters will be formed beneath the surface of the overlay, thereby causing improper bonding and potential surface irregularities on the outside surface of the overlay. It is important that the laminate overlay of the present invention is substantially cured separately, away from the underlying substrate. In this way, the shrinkage that is natural phenomenon of the thermosetting resins that are cured also occurs away from the underlying substrate. The pre-cured bonded laminate overlay will then experience only minimal shrinkage when later adhered to the solid substrate in a hot press. As a result, there is a drastic reduction in the amount of face checks and warping of the underlying solid substrate (U.S. Patent No. 5,089,348, Louderback).

Melamine impregnated decorative paper laminated to phenol formaldehyde impregnated kraft paper at temperatures of about 230-310°F (110-155°C) and pressures of greater than about 300 psi (20 Bar) and preferably about 750-1500 psi (51-102 bar) are commercially referred to as high pressure laminate. Melamine impregnated decorative paper laminated to particle board at temperatures of about 230-310°F (110-155°C) and pressures of up to about 300 psi (20 bar) are commercially referred to as low pressure laminate. Lamination is done commercially in continuous and batch presses.

High pressure laminate can be adhesively bonded to a substrate material such as plywood, hardboard, particle board, cement-asbestos board, and the like, to give it additional strength and rigidity for its intended structural use. The bonding process usually requires, as the initial step, the sanding of the back surface of the laminate to ensure an adequate bond between the laminate and adhesive used in bonding the laminate and substrate material. The sanding step adds to the manufacturing costs of laminate. Laminate are relatively inflexible after the resins contained therein have been cured during the lamination process. Thin laminates (e.g., laminates comprising merely an overlay sheet, a decorative sheet, and single sheet of kraft paper or liner board) are particularly susceptible to damage during the sanding step due to their brittleness after lamination. The need for sanding can be obviated by coating the backing sheet with a thermoset adhesive. The resulting laminate is readily glueable to substrates with conventional adhesives (U.S. 4,258,103, Hosmer, et al.).

A thin top coated decorative paper can be laminated to kraft liner board and used as a face ply for resin coated board. The thin top coating is a clear resin, preferably melamine resin. Alternatively, kraft liner board can be top-coated with resin and used as the top face ply for resin coated board. To prevent damage during manufacture, shipping and storage, the decorative paper can be pre-laminated with a removable sheet of plastic, preferably a Mylar Sheet. A Mylar sheet provides temporary protection and is removed when the panel is put in use. A center ply is particle board, fiberboard or plywood. A back ply can be kraft liner board. The face, center and back plies are adhesively bonded. Adhesive is applied between the plies (Hales, CA 781,437, Valerius, U.S. 3,616,021, Van Dyek, U.S. 3,929,545, and Julian, et al., U.S. 4,552,792).

U.S. Patent No. 3,547,767, issued December 15, 1970 to Keeling et al., discloses a flexible heat and pressure consolidated decorative laminate comprising a nitrite rubber latex impregnated base and a superimposed transparent thermoplastic film.

U.S. Patent No. 4,263,373, issued April 21, 1981 to McCaskey, Jr. et al., discloses a method of making an ultra thin glue adherable decorative laminate. The method generally includes assembling a laminate stack-up consisting of one paper sheet having a top decorative surface and a bottom surface coated with a resinous film, about 0.25 mil to about 5 mil thick, effective to opacify the paper and provide a barrier to resin flow, and one abrasion resistant protective overlay sheet. The method further includes heat and pressure consolidating the stack-up to form a unitary decorative laminate having a thickness of between about 5 mil and 15 mil thick, and having a resinous film on one side that is glue adherable.

U.S. Patent No. 4,263,073, issued April 21, 1981 to Jaisle et al., discloses a process for releasing laminates in which an effective separator sheet for releasing laminates in a press pack from one another can inexpensively be made by first coating a paper web having a water absorption of at least 200 seconds with an aqueous solution of a water-soluble alkaline earth or earth metal salt, then coating the same surface with a film of a salt of an alginic acid. Jaisle et al. states that the inventive concept resides in the utilization of a paper having a water absorption such that as the salt sizing and alginate coatings are applied to the surface of the paper, substantially all of the coating is retained on the surface fibers thereof and substantially no penetration into the web occurs.

However, in spite of the advances in the prior art there is still a need for resin coated decorative paper with good stain and wear characteristics and a resistance to stress cracking, especially under low humidity conditions that can be adhesively bonded to particle board.

There is also a need for resin coated decorative paper that has been cured at pressures of greater than about 300 psi (20 bar) and preferably about 750-1500 psi (51-102 bar).

There is even also a need for melamine resin coated decorative paper with sufficient substantially fully cured melamine resin on its wear surface for imparting good stain and wear characteristics.

There is still also a need for the decorative paper to have substantially less resin on its back surface that is to be adhesively bonded to particle board.

There is yet also a need for the decorative paper to have sufficient flexibility and not be brittle so that it can be handled without breaking.

There even still also a need for making melamine resin coated decorative paper without the need for making impregnated decorative paper pre-pregs.

There is even yet a need for reducing storage costs for decorative pre-pregs.

These and other needs in the prior all will become apparent upon review of this application.

It is an object of the present invention to provide a method of making a stack for forming a microveneer decorative laminate.

According to the present invention, there is provided a method of making a stack for forming a microveneer decorative laminate, the method characterized by the steps of:
(a) impregnating an α- cellulose overlay paper with a thermosetting resin;
(b) partially curing the resin impregnated overlay paper;
(c) forming a stack characterized by (i) a top layer of the α- cellulose overlay paper impregnated with the partially cured thermoset resin; (ii) a non-resin impregnated decorative layer positioned against the top layer; and (iii) a back layer having a first side positioned against the decorative layer and a back side positioned for glueing, wherein the back side is impregnated with a readily glueable resin not requiring sanding.

In the microveneer decorative laminate, flow of the resin in the decorative layer is limited such that sufficient substantially fully cured melamine resin remains on the wear surface of the decorative paper for imparting good stain and wear characteristics. Flow through the decorative paper is limited such that the paper will be substantially fully impregnated with resin for imparting strength to the decorative paper. Limiting the flow permits a reduction in the amount of resin required.

Melamine formaldehyde resin is recognized for its stain and wear characteristics and is the preferred resin. Mixtures of melamine formaldehyde resin with up to 33 percent urea formaldehyde resin by weight of the mixture are also useful. Flow under high temperature and pressure laminating conditions is limited by the extent the resin is partially cured. It is known to those skilled in the art of making laminate that the flow of resin under high temperature and pressure laminating conditions can be controlled by adjusting the cure conditions while partially curing the resin and by the selection and concentration of catalyst and other components in the resin formulation.

Resin can be impregnated into overlay, partially cured and placed over the wear surface of decorative paper that has not been impregnated with resin. Resin can also be coated on the wear surface of decorative paper and partially cured. The resin is partially cured for limiting its flow. Thereafter, it is substantially fully cured under high temperature and pressure laminating conditions.

A thermoplastic film can be placed over the resin impregnated overlay or decorative paper as part of the laminate stack before subjecting the laminate stack to heat and pressure consolidation for imparting decorative characteristics such as gloss or texture. The thermoplastic film can remain on the coated paper for providing support for the paper as it is being handled. The thermoplastic film can remain on the laminate during the fabrication of an article and until a customer removes the thermoplastic film. Non-limiting examples of suitable thermoplastic films include, polyethylene terephthalate film and polypropylene (especially polypropylene homopolymer) films.

The "microveneer" decorative laminate of the present invention includes a decorative layer that may be either a solid color or print decorative paper having a coating of resin on its wear surface, a resin impregnated glueable backing, and optionally, one or more resin impregnated core layers, and further optionally, one or more resin impregnated overlay layers.

The microveneer decorative laminate of the present invention provides a glueable laminate not requiring sanding of the backing prior to glueing, and which has good stress crack resistance.

In general, any suitable solid color and print decorative paper useful in the making of high and low pressure decorative laminate are useful in making the microveneer decorative laminate of the present invention. In general, the solid color and print decorative paper utilized in the present invention is impregnated with resin for strength.

In the practice of the present invention, any suitable type of material may be utilized as the one or more core layers. Preferably, kraft paper as is well known in the art is utilized as the one or more core layers. Generally, any suitable basis weight of kraft paper (based on 3000 sqft. ream) may be utilized, generally in the range of about 25 to about 150 pounds, preferably in the range of about 40 to about 140 pounds, and more preferably in the range of about 85 to about 125 pounds. The one or more core sheets are impregnated with any suitable resin as is well known in the art, most preferably impregnated with phenol-formaldehyde resin.

In the practice of the present invention, any suitable type of material may be utilized as the backing layer. As non-limiting examples, kraft paper or broke paper as is well known in the art may be utilized as the backing layers. Generally, any suitable weight of kraft paper may be utilized, generally in the range of about 25 to about 150 pounds, preferably in the range of about 25 to about 65 pounds, and more preferably in the range of about 25 to about 50 pounds. The backing sheet may be impregnated with any suitable resin that will provide a readily glueable backing not requiring sanding. As a non-limiting example, the backing sheet may be coated with polyvinyl alcohol (PVA). As another non-limiting example, the backing sheet may be impregnated with phenolic-formaldehyde resin on the side facing the core or decorative sheet, and coated with polyvinyl acetate on the back or glueable side of the decorative sheet.

The microveneer decorative laminate of the present invention may be utilized as a decorative surface by adhesion to a substrate or other article where desired. For example, it can be adhesively bonded to a substrate such as particle board, to furniture, to counter tops and the like.

In general, the microveneer decorative laminate is obtained utilizing manufacturing equipment and processes that are commercially used for making high pressure decorative laminate.

In one embodiment of this invention, resin is first impregnated into overlay and partially cured by passing the resin impregnated overlay through an oven or any suitable such heating equipment. The overlay is positioned over decorative solid color or print paper that has not been impregnated with resin, and optionally along with one or more resin impregnated core sheets, and a resin impregnated backing sheet, all of which are laminated together under pressures of generally greater than about 300 psi (20 bar) and preferably in the range of about 750-1500 psi (51-102 bar). A plastic film can be positioned over the resin impregnated overlay and removably laminated to the overlay as the overlay and decorative paper are permanently laminated together. The plastic film can serve the function of a caul plate for imparting gloss and texture and as a separator sheet as is known in the art of making plastic laminate. Polyethylene terephthalate (PET) film begins to melt at temperatures above 230°C, substantially above the temperatures that the resins of this invention are cured. Caul plates, foil and separator sheets used in the making of high and low pressure decorative laminate can also be used.

The resin content in the overlay is adjusted for providing the amount of resin needed for a wear resistant surface and for impregnating the decorative paper. This is less resin than is generally utilized in the prior art overlay laminated to decorative solid color and print paper and a core of resin impregnated kraft paper. This reduction in resin content provides an overlay that is less brittle than overlay treated to a higher resin content.

The resin composition is adjusted for limiting flow as the partially cured resin in the overlay is laminated with decorative paper that has not been impregnated with resin. The resin in the overlay needs to flow though the decorative paper for impregnating and providing strength to the decorative paper. The flow needs to be limited so that the decorative side of the laminate has desired wear and decorative characteristics. The amount of resin on the opposite side of the decorative sheet that is to be adhesively bonded to the backing layer or the optional core layer is limited.

Conditions under which the resin is partially cured can be adjusted for controlling the flow of the resin during lamination. Catalyst can be selected for controlling flow. In general too high of resin flow will result in a laminate without enough resin on its decorative surface for having commercially significant wear and decorative characteristics. In general, too low of resin flow will result in a laminate without enough resin in the decorative paper for providing required strength. While suitable resin flow will vary depending upon the paper characteristics, the laminating equipment utilized, and the laminating conditions, in general the resin flow will be in the range of about 10 to about 40, preferably in the range of about 12 to about 30, and more preferably in the range of about 15 to about 25. Flow is determined from weight differences after pressing a stack of 3 inch diameter pieces (8 pieces for solid and 12 pieces for overlay) of partially cured, resin impregnated overlay at 1000 psi and 320°F (160°C) for 5 minutes and breaking off the resin extending beyond the edge of the overlay.

The amount of resin in the overlay is also adjusted for the basis weight and porosity of the decorative paper. The basis weight and resin retaining capacity of the overlay, and optional core sheets and the backing sheet are also considerations in controlling the flow of resin during lamination.

In another embodiment, resin is coated on the decorative surface of solid color decorative paper, which is laminated along with one or more optional resin impregnated core sheets and the resin impregnated backing sheet. The resin impregnates the decorative paper and is partially cured. A resin content in the range of about 40 to about 48, preferably in the range of about 41 to about 45, and more preferably in the range of about 43 to about 45, by weight of the impregnated decorative paper has been found to provide sufficient resin for solid color decorative paper having basis weights of about 50 - 80 pounds per 3000 square foot. The flow is adjusted to the range of about 1 to about 5, preferably in the range of about 2 to about 5, and more preferably in the range of about 2 to about 3, by weight of the resin impregnated decorative paper.

Solid color and print decorative paper coated with melamine resin as described in these embodiments have been adhesively bonded to particle board with commercially available wood glue, vinyl acetate-ethylene copolymer adhesive. This adhesive is commercially available under the product name Airflex® Emulsion from Air Products and Chemicals, 7201 Hamilton Boulevard, Allentown, PA 18195-1501.

Resin is fully cured for achieving the benefits of this invention at pressures of at least 300 psi (20 bar) and preferably about 750-1500 psi (51-102 bar). In the embodiment of this invention with resin impregnated overlay supplying the resin during final cure for decorative paper, it has been found that less resin is on the adhesive bonding surface when the resin is fully cured under 450 psi than under 900 psi. It is believed that the flow of resin increases as it cures under higher pressures.

### EXAMPLES

The following examples are provided merely to illustrate various embodiments of the present invention and are not meant to limit the scope of the claims.

### Example 1

Resin content, volatile content and flow have been determined for an 8 pound per 3000 square foot ream overlay that is impregnated with melamine formaldehyde resin. This overlay is commercially available from Papierfabrik Schoeller & Hoesch GmbH Hordener Strasse 37, D-76593 Gernsbach, Germany. A resin content of about 80 percent by weight of the impregnated overlay has been found to provide sufficient resin for lamination with solid color and print decorative paper having basis weights of about 50-80 pounds per 3000 square foot. A resin content of about 75-77 percent by weight of the impregnated overlay has been found to provide sufficient resin for lamination with print decorative paper having basis weights of about 50-75 pounds per 3000 square foot. At the lower resin content, laminate made with solid color decorative paper was mottled.

The volatile content of this resin was adjusted to about 6.5 percent by weight of the resin impregnated 8 pound per ream overlay. The flow of the resin was adjusted to about 15 percent by weight of the resin impregnated overlay. The resin was catalyzed with a commercially available p-toluenesulfonic acid catalyst for melamine formaldehyde resins. This catalyst is sold under the trade name of Madurit-835 and is commercially available from Hoechst Celanese Cow., P.O. Box 1026, Charlotte, NC 28201-1026. Madurit-835 is described as an amine salt n an aqueous solution. The amine salt used Madurit-835 is described as Morpholynium P-Tosylate. Esters of p-toluenesulfonic acid are known as tosylates. Morpholynium P-Tosylate has been assigned CAS number 13 732-62-2.

### Example 2

Physical properties of various samples made according to this example Tables 1-3. Specifically, Table 1 provides the physical properties of non treated solid color paper laminated with treated overlay adhesively bonded to particle board, Table 2 provides physical properties of non treated print paper laminated with treated overlay adhesively bonded to particle board, and Table 3 provides physical properties of treated solid color paper adhesively bonded to particle board.

Abrasion, stain, hot water and hot wax results were measured under National Electrical Manufacturers Association (NEMA) testing procedures. The resin was cured at 260-290°F (126- 143°C) and at the pressures shown on Tables 1 and 2. Samples shown on Table 3 were cured at 900 psi. The vinyl acetate-ethylene copolymer adhesive used for bonding decorative paper coated with cured melamine resin to particle board on Tables 1-3 is commercially available from Air Products and Chemicals, Inc., 7201 Hamilton Boulevard, Allentown, PA 18195-1501 under trade name Airflex® Emulsion.

**TABLE 1**

| PHYSICAL PROPERTIES OF NON TREATED SOLID COLOR PAPER LAMINATED WITH TREATED OVERLAY ADHESIVELY BONDED TO PARTICLE BOARD | | | | | | | | | |
|---|---|---|---|---|---|---|---|---|---|
| Overlay | Resin | Pressure | Flow | Abrasion | | Stain | | Water | Wax |
| | | | | IP | NEMA | 1-10 | 11-15 | Hot | Hot |
| 1b/Ream | wt. % | psi | wt. % | cycles | cycles | | | | |
| 8 | 79.9-81.0 | 450 | 9.4-14 | 530 | 663 | 6 | 6 | 6 | 6 |
| 8 | 79.9-81.0 | 900 | 9.4-14 | 286 | 588 | 6 | 6 | 6 | 6 |
| 12 | 69.5-71.2 | 900 | 17 | 790 | 1100 | 6 | 5* | 6 | 5 |
| 12 | 71.6-73.4 | 900 | 20 | 560 | 880 | 6 | 2* | 5 | 6 |
| 17 | 67.4-68.9 | 900 | 12 | 850 | 1340 | 6 | 5* | 6 | 6 |
| 17 | 71.8-72.1 | 900 | 21 | 530 | 845 | 6 | 2* | 6 | 6 |
| LEGEND FOR STAIN/WATER/WAX TESTING 6 NO STAIN; 5 SLIGHT STAIN (FROM IODINE). 3-4 MODERATE STAIN; 1-2 SEVERE STAIN. | | | | | | | | | |

**TABLE 2**

| PHYSICAL PROPERTIES OF NON TREATED PRINT PAPER LAMINATED WITH TREATED OVERLAY ADHESIVELY BONDED TO PARTICLE BOARD | | | | | | | | | |
|---|---|---|---|---|---|---|---|---|---|
| Overlay | Resin | Pressure | Flow | Abrasion | | Stain | | Water | Wax |
| | | | | IP | NEMA | 1-10 | 11-15 | Hot | Hot |
| 1b/Ream | Wt. % | psi | wt % | cycles | cycles | | | | |
| 8 | 79.9-81.0 | 450 | 9.4-14 | 212 | 371 | 6 | 6 | 6 | 6 |
| 8 | 79.9-81.0 | 900 | 9.4-14 | 138 | 334 | 6 | 6 | 6 | 6 |
| 12 | 69.5-71.2 | 900 | 17 | 223 | 453 | 6 | 6 | 6 | 6 |
| 12 | 71.6-73.4 | 900 | 20 | 212 | 570 | 6 | 6 | 6 | 6 |
| 17 | 67.4-68.9 | 900 | 12 | 530 | 795 | 6 | 6 | 6 | 6 |
| 17 | 71.8-72.1 | 900 | 21 | 265 | 480 | 6 | 6 | 6 | 5 |
| LEGEND FOR STAIN/WATER/WAX TESTING 6 NO STAIN; 5 SLIGHT STAIN (FROM IODINE); 3-4 MODERATE STAIN; 1-2 SEVERE STAIN. | | | | | | | | | |

**TABLE 3**

| PHYSICAL PROPERTIES OF TREATED SOLID COLOR PAPER ADHESIVELY BONDED TO PARTICLE BOARD | | | | | | | | |
|---|---|---|---|---|---|---|---|---|
| Resin | Volatile | Flow | Abrasion | | Stain | | Water | Wax |
| | | | IP | NEMA | 1-10 | 11-25 | Hot | Hot |
| Wt. % | 1b/Ream | psi | cycles | cycles | | | | |
| 42.2-42.2 | 6.0 | 1.4 | 636 | 832 | 6 | 6 | 6 | 6 |
| 42.6-42.9 | 6.6 | 1.4 | 636 | 848 | 6 | 6 | 6 | 6 |
| LEGEND FOR STAIN/WATER/WAX TESTING 6 NO STAIN; 5 SLIGHT STAIN (FROM IODINE); 3-4 MODERATE STAIN; 1-2 SEVERE STAIN. | | | | | | | | |

The resin content of treated overlay paper shown on Tables 1 and 2, when used in making high pressure decorative laminate would have the following resin content. The 8 pound overlay would be treated to about 84 percent by weight of the treated overlay paper. The 12 pound overlay would be treated to about 80 percent by weight of the treated overlay paper. The 17 pound overlay would be treated to about 76.5 percent by weight of the treated overlay paper. The resin content of treated decorative paper shown on Table 3, when used in making high pressure decorative laminate has a resin content of about 54 percent by weight of the treated paper.

### Example 3

The procedures of Example 2 were utilized except that a 115 pound phenolic treated kraft core sheet and a 25 pound natural kraft paper backing sheet coated with poly vinyl acetate (PVA) were provided.

A standard differential method was used to coat a 25# mill finished natural kraft with 17#/3000 sqft ream PVA/starch type adhesive at the following process conditions:
Line speed: 225 fpm
Oven temperature: 300-200/250/250 F
Pickup/Applicator: 180/345 fpm
Smoothing bars: 2 reverse at 233 fpm

The paper was assembled as follows and pressed into a thin laminate by a process well known in the laminating field:
8 pound overlay sheet
Non treated print
115 pound phenolic treated kraft
25 pound PVA coated natural kraft
Or
No overlay sheet
Treated solid sheet
115 pound phenolic treated kraft
25 pound PVA coated natural kraft

The laminate lay-up was pressed between plates or gang pressed.

The thin laminate was then hot or cold bonded to medium density, mat-formed, wood particle board. Physical properties of the resulting panel are shown in Table 4. Abrasion, stain, water and wax results were measured under National Electrical Manufacturers Association (NEMA) testing procedures.

**TABLE 4**

| PHYSICAL PROPERTIES OF NON TREATED PRINTED PAPER LAMINATED WITH TREATED OVERLAY AND TREATED SOLID LAMINATED WITHOUT OVERLAY | | | | |
|---|---|---|---|---|
| | Abrasion | Stain | | Water |
| | NEMA | 1-10 | 11-15 | Hot |
| | Cycles | | | |
| Non treated Print | 450 | 6 | 6 | 6 |
| Treated Solid | 1015 | 6 | 6 | 6 |
| LEGEND FOR STAIN/WATER/WAX TESTING 6 NO STAIN; 5 SLIGHT STAIN (FROM IODINE) ; 3-4 MODERATE STAIN; 1-2 SEVERE STAIN. | | | | |

In addition to these physical properties, the panels showed no stress cracking after 16 hrs at 70C and 7 days at 70C. The panels continued to have good bonding under extended heat, high and low humidity (5days/22°C/70% relative humidity, and low heat cycle 120F to 10F 5 cycles).

### Example 4

8 pound loading of phenolic resin was applied by direct gravure to one side of a 40 pound broke sheet at the following conditions:
Speed 100 fpm
Oven temperature: 280/300/300F

The phenolic coated paper was then coated with 17#/3000 sqft ream PVA/starch type adhesive as described in Example 3. The coated paper was assembled as follows and pressed into a thin laminate by a process well known in the laminating file:
8 pound overlay sheet
Non treated print or solid
40 pound phenolic/PVA treated broke paper
Or
No overlay sheet
Treated print or solid sheet
40 pound phenolic/PVA treated broke paper

The paper was pressed between plates or gang pressed.

The thin laminate was then hot or cold bonded to medium density, mat-formed, wood particle board. Physical properties of the resulting panel are shown in Table 5. Abrasion, stain, water and wax results were measured under National Electrical Manufacturers Association (NEMA) testing procedures.

**TABLE 5**

| PHYSICAL PROPERTIES OF NON TREATED PRINTS PAPER LAMINATED WITH TREATED OVERLAY AND TREATED SOLID LAMINATED WITHOUT OL | | | | |
|---|---|---|---|---|
| | Abrasion | Stain | | Water |
| | NEMA | 1-10 | 11-15 | Hot |
| | Cycles | | | |
| Non treated Print | 450 | 6 | 6 | 6 |
| Treated Solid | 855 | 6 | 6 | 6 |
| LEGEND FOR STAIN/WATER/WAX TESTING 6 NO STAIN; 5 SLIGHT STAIN (FROM IODINE); 3-4 MODERATE STAIN; 1-2 SEVERE STAIN. | | | | |

In addition to these physical properties, the panels showed no stress cracking after 16 hrs at 70C and 7 days at 70C. The panels continued to have good bond under extended heat, high and low humidity (5days/22°C/70% relative humidity, and low heat cycle 120F to 10F 5 cycles).

While the illustrative embodiments of the invention have been described with particularity, it will be understood that various other modifications will be apparent to and can be readily made by those skilled in the art without departing from the spirit and scope of the invention. Accordingly, it is not intended that the scope of the claims appended hereto be limited to the examples and descriptions set forth herein but rather that the claims be construed as encompassing all the features of patentable novelty that reside in the present invention, including all features that would be treated as equivalents thereof by those skilled in the art to which this invention pertains.

The following features disclosed in the foregoing description and following claims may, both separately and in any combination thereof, be material for realising the invention in diverse forms thereof.

## Claims

1. A method of making a stack for forming a microveneer decorative laminate, the method characterized by the steps of:
(a) impregnating an α- cellulose overlay paper with a thermosetting resin;
(b) partially curing the resin impregnated overlay paper;
(c) forming a stack characterized by (i) a top layer of the α- cellulose overlay paper impregnated with the partially cured thermoset resin; (ii) a non-resin impregnated decorative layer positioned against the top layer; and (iii) a back layer having a first side positioned against the decorative layer and a back side positioned for glueing, wherein the back side is impregnated with a readily glueable resin not requiring sanding.

2. The method according to claim 1, wherein the resin in the top layer is a partially cured melamine formaldehyde resin, and the resin impregnating the back side of the back layer is a polyvinyl acetate.

3. The method according to claims 1 or 2, wherein the partially cured melamine formaldehyde resin has a flow in the range of 10 to 40 percent of the combined weight of the stack.

4. The method according to any of the preceding claims, further characterized by the step of including one or more resin impregnated core sheets positioned between the decorative layer and the back layer.

5. The method according to any of the preceding claims, the method further characterized by the step of consolidating the stack under heat and pressure to form the decorative laminate.

6. The method according to any of the preceding claims, further characterized by the steps of:
(a) substituting a decorative paper in place of the overlay paper;
(b) impregnating the decorative paper with a curable thermoset resin;
(c) partially curing the resin in the impregnated decorative paper;
(d) forming a stack characterized by (i) a top layer of the decorative paper; and (ii) a back layer having a first side positioned against the top layer and a back side position for glueing, wherein the back side is impregnated with a readily glueable resin not requiring sanding; and
(e) consolidating the stack under heat and pressure to form the decorative laminate.
